# EUROPEAN PATENT SPECIFICATION

(11) **EP 0 802 108 B1**
(45) Date of publication and mention of the grant of the patent: **16.12.1998**
(21) Application number: 97111627.2
(22) Date of filing: 03.09.1993
(51) Int. Cl.: B62D 33/06

(54) **Motor truck having a cab**
Fahrerhaus für einen Lastkraftwagen
Camion ayant une cabine

(30) Priority: 25.09.1992 JP 72997/92 U
(43) Date of publication of application: 22.10.1997
(62) Divisional of application: 93306993.2
(73) Proprietor: AITO SYOJI KABUSHIKI KAISHA, Nagoya-shi, Aichi-ken (JP)
(72) Inventor: Maeda, Gengo, Chikusa-ku, Nagoya-Shi, Aichi-Ken (JP)
(74) Representative: Paget, Hugh Charles Edward

(56) References cited:
- DE-A- 1 943 604
- DE-A- 1 966 196
- DE-C- 807 897
- FR-A- 2 100 383
- US-A- 2 490 162

## Description

The present invention relates in general to a motor truck for transporting a freight, and more particularly to a motor truck which assures efficient, safe transportation of the freight and has increased load capacity. More particularly, the invention relates to a motor truck having the features of the first part of claim 1.

There has been a rapidly growing demand for land transportation of goods, commodities or freight by motor trucks, in place of railways, keeping pace with high economic growth, remarkable technological innovation and developments, and extension and improvement of superhighway or speedway networks, in the recent years. In an effort to meet this growing demand for the freight transportation by motor trucks, various attempts and studies have been made heretofore for improving the transportation efficiency by increasing the size of the motor trucks.

In the recent transportation by land, motor trucks of so-called "cab-over-engine" type are prevailing over so-called "cab-behind-engine" type, since the rear body or freight loading deck of the cab-over-engine type has a larger surface area, owing to the arrangement in which an engine is disposed ahead of the front axle while a cab is located over the engine.

However, the cab-over-engine type motor truck more or less suffers from low running stability, due to a relatively high position of the cab disposed over the engine, which causes a relatively high position of the gravity center of the vehicle. Further, the weight of the freight can be supported only by the rear body whose length is considerably shorter than the entire length of the truck.

It is known in the utility vehicle industry to position the engine behind the rear axle of the construction, and to operatively connect it to the rear axle. One example of such layouts is given in "Leyland Panther"; Leaflet No. 880a: Leyland Motors; Issued May, 1966.

For increased efficiency and safety of freight transportation, the inventor of the present invention proposed a motor truck of so-called "cab-ahead-body" type as disclosed in Publication No. 44-4161 of examined Japanese Utility Model Application (published for opposition purpose).

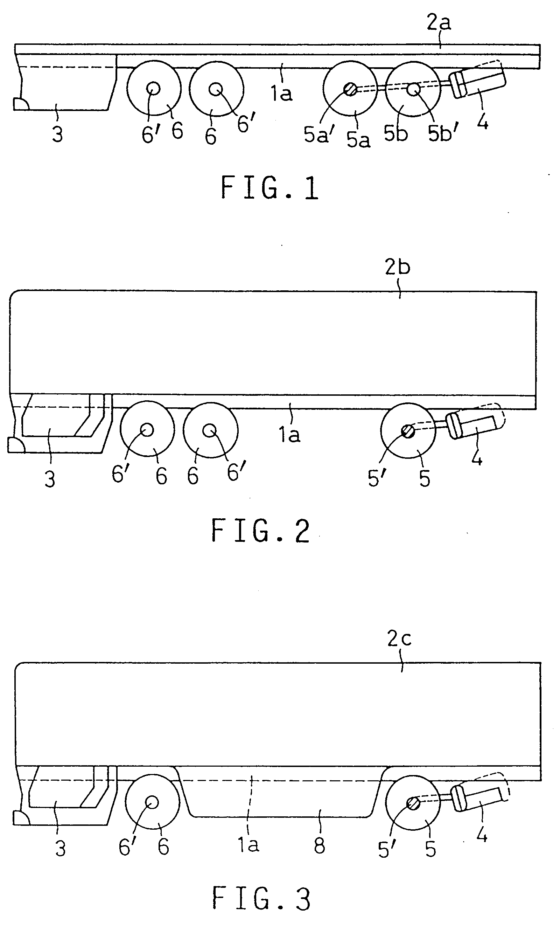

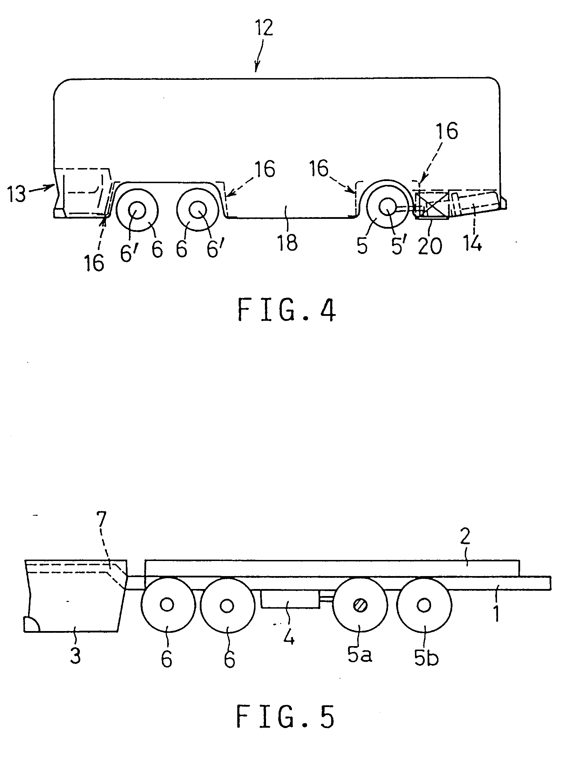

Referring to Fig. 2, the cab-ahead-body motor truck has a frame 1, a freight loading deck 2 mounted on the frame 1, a cab 3 connected to the front end of the frame 1 and an engine 4 suspended from the frame 1. Front and rear axles rotatable with respective wheels 5a, 5b, 6 are fixed through a suspension system to the frame 1. One of the two pairs of rear wheels 5a, 5b is operatively connected to the engine 4, to serve as the driving wheels 5a. The front wheels 6 are steering wheels. The frame 1 is provided with a cab support 7 extending from its front end in the forward direction, so that the cab 3 is suspended from the cab support 7.

In the cab-ahead-body type motor truck described above, the support portion of the cab support 7 is almost flush with the upper surface of the deck 2, and the cab 3 suspended from the cab support 7 is positioned such that the bottom of the cab 3 is at the lowermost limit according to the appropriate regulation on the transportation vehicles. Further, the suspension of the cab 3 from the support 7 prevents direct transmission of vibrations from the frame 1 to the cab 3. Thus, the cab 3 whose gravity center is lower than the upper surface of the deck 2 contributes to lowering the gravity center of the motor truck. Further, the cab 3 located ahead of the deck 2 and the engine 4 located under the deck 2 cooperate to permit the entire length of the deck 2 to be used for supporting the freight. Consequently, the cab-ahead-body type motor truck is capable of transporting relatively long, heavy articles in a relatively efficient and safe manner.

However, the length of the deck 2 which is determined by the length of the frame 1 is considerably smaller than the entire length of the truck which includes the length of the cab 3 suspended from the cab support 7. In other words, the effective length of the truck usable for supporting the freight is determined by and limited to the length of the frame 1 which is smaller than the entire length of the truck. Accordingly, the cab-ahead-body motor truck is not completely satisfactory in terms of the load capacity per length of the truck.

US-A-2 490 162 discloses in combination the features of the first part of claim 1.

It is therefore an object of the present invention to provide a motor truck capable of transporting a freight in an efficient, safe manner, while effectively utilizing the entire length of the truck for supporting or accommodating the freight.

The above object may be achieved according to the principle of the present invention, which provides a motor truck as set out in claim 1.

In the cab-under-body motor truck of the present invention constructed as described above, the length of the body for supporting the freight is substantially equal to the entire length of the truck. This full-length body is available because the cab and the engine are both disposed under the full-length body. Thus, the entire length of the motor truck can be effectively utilized for supporting or accommodating the freight, whereby the load capacity of the present motor truck per length of the truck, and the maximum freight length are significantly increased over the conventional cab-behind-engine type, cab-over-engine type and cab-ahead-body type. Thus, the present motor truck has considerably increased freight transporting efficiency. Further, the running stability and safety of the present motor truck are improved owing to the position of the cab and engine disposed under the full-length body.

The running stability of the motor truck is further improved because the engine is located behind the rear axle as the driving axle. In this case, the weight of the cab located ahead of the front axle is more or less counterbalanced by the weight of the engine (and the related components) located behind the rear axle, whereby the stability of running without a freight is improved. This arrangement also provides a relatively lower gravity center of the truck as a whole, and assures enhanced running and steering stability, without side slipping of the rear wheels upon cornering of the vehicle along a sharp curve or abrupt brake application.

The motor truck has a full-length semi-monocock box structure of integral chassis-body construction, which usually includes cross members for reinforcing the box structure as the full-length body. The cab is located at a front lower portion of the semi-monocock box structure, and is considered to be disposed under the full-length body for supporting the freight.

An auxiliary body or an auxiliary body portion may be disposed between the front and rear axles, such that the auxiliary body is suspended from the frame or the auxiliary body portion has a bottom lower than the axes of the axles. In this case, the load capacity is increased to an extent corresponding to the capacity of the auxiliary body or the auxiliary body portion.

### BRIEF DESCRIPTION OF THE DRAWINGS

The above and optional objects, features and advantages of the present invention will be better understood by reading the following detailed description of presently preferred embodiments of the invention, when considered in connection with the accompanying drawings, in which:
Fig. 1 is a schematic side elevational view showing another form of "full-space" motor truck having a semi-monocock structure constructed according to a still further embodiment of the invention; and
Fig. 2 is a schematic side elevational view of a known motor truck of so-called "cab-ahead-body" truck.

Referring to Fig. 1, the motor truck is provided with two pairs of rear wheels 5 fixedly mounted on rear axle 5'. If more than one pair of rear wheels are provided, the front pair serve as driving wheels. The truck is also provided with two pairs of front wheels 6 fixedly mounted on the opposite ends of respective front axles 6' also connected to the frame 1a via a suitable suspension system. These front wheels 6 serve as steering wheels.

The body 12 of the truck is a semi-monocoque box structure which is reinforced by cross members 16. These cross members 16 are provided near respective portions of the body 12 to which the front and rear axles 6' and 5' are fixed. The semi-monocoque body 12 has a front lower portion which is located ahead of the front axles 6' and whose bottom has almost the same height as the axes of the front axles 6'. This front lower portion is constructed to serve as a cab 13. Thus, the cab 13 is considered to be disposed below the body 12 and has the height similar to that of ordinary passenger cars.

As well known in the art, the cab 3 is a box structure in which there are provided one or more seats, a steering wheel, an accelerator pedal, a brake pedal, a clutch pedal, and other devices for operating the truck.

The body 12 also has a rear lower portion which is located behind the rear axles 5' and which houses a power unit including an engine 14 operatively connected to the driving wheels 5'.

The engine 4 is not limited to any specific type, and may be any internal combustion engines used for the known motor trucks. For reduced size of the power assembly and assuring the minimum height from the ground level, it is desirable to use a V-type engine or horizontal opposed type engine, which may be either transversely or vertically mounted.

The body 12 includes a central lower portion 18 which is disposed between the front and rear axles 6', 5' and which has a bottom lower than the axes of the axles 6', 5'. In the present embodiment, a fuel tank 20 is disposed between the rear axle 5' and the engine 14, and suspended from the body 12.

It will be understood that the positioning of the cab 13 and engine 14 at the level of the wheel axles permits the entire length of the body 12 to be used for accommodating the freight. Unlike the body provided on the known motor truck, the body 12 has a length equal to the length of the truck, namely, equal to the entire length of the chassis of the truck. Accordingly, the body 12 provides considerably increased load capacity value as compared with that of the body of the known motor truck.

The increased loading space and load capacity of the present truck result in a significance increase in the transportation efficiency of the truck. While the conventional measure to improve the transportation efficiency of a motor truck is to increase the size of the truck, the principle of the present invention is a departure from the conventional concept.

In the present truck constructed as described above, the cab 13 is located ahead of the front axles 6', while the engine 14 is located behind the rear axles 5'. Thus, the cab 13 and the engine 14 contribute to weight balancing of the truck in the longitudinal direction, even when the truck is not loaded with a freight. Accordingly, the present motor truck exhibits enhanced running and steering stability, with effectively reduced side slipping of the rear wheels 5 upon sharp cornering or abrupt brake application.

Further, the cab 13 and engine 14 disposed at the level of the wheel axles contribute to lowering the gravity center of the truck, thereby permitting further improved running and steering stability.

In the present embodiment, the cab 13 is sufficiently distant from the engine 14 which is a source of noises and vibrations, whereby the passengers including the driver suffer from minimum degrees of the noises and vibrations during running of the truck.

It is further noted that the cab 13 located just ahead of the front axle permits the driver to drive the truck as if the driver was on an ordinary passenger vehicle, because of similar driving height from the ground level. This facilitates visual communications with the drivers of the passenger cars, and avoid incontinences which would be encountered on the conventional cab-over-engine truck, for example, due to a relatively high driving position, which may prevent the driver to observe a location just ahead of the front end of the truck. Accordingly, the position of the cab 13 assures safe operation and running of the truck. Further, the cab 13 disposed at the relatively low position minimizes the passengers' fatigue due to rolling of the vehicle as experienced on the conventional truck whose cab is located at a relatively high position.

While the present invention has been described in its presently preferred embodiments, for illustrative purpose only, it is to be understood that the present invention is not limited to the details of the illustrated embodiments, but may be otherwise embodied.

For example, the principle of the present invention is equally applicable to a motor truck having a full-monocoque or integral chassis-body construction. For instance, the body 12 of the truck of Fig. 1 may be modified to have a full-monocoque structure without the cross members 16.

In all the illustrated embodiments, the cab 13 is disposed such that the front end of the cab is located at the extreme front end of the or body 12. However, the front end of the cab may be spaced some distance behind the extreme front end of the deck or body, provided that the cab is located ahead of the front axles 6'.

## Claims

1. A motor truck comprising:
a full-length body (12) for supporting freight, said full-length body having a length substantially equal to that of the truck;
a front axle (6') rotatable with front wheels (6), and a rear axle (5b') rotatable with rear wheels (5);
a cab (13) ahead of said front axle; and
an engine (14),
characterised in that said engine (14) is located behind said rear axle (5'), and is operatively connected to said rear axle,
said full-length body consists of a semi-monocoque box structure (12) to which said front and rear axles (6',5') are fixed, said semi-monocoque box structure having a front lower portion ahead of said front axle (6') and at the same level as said front axle (6'), said cab (13) being disposed in said front lower portion of said semi-monocoque box structure, and said semi-monocoque box structure having a rear lower portion behind said rear axle (5') and at the same level as said rear axle in which said engine (14) is located.

2. A motor truck according to claim 1, wherein said semi-monocoque box structure (12) includes a plurality of cross members (16) for reinforcing the structure.

3. A motor truck according to claim 1 or 2, wherein said semi-monocoque box structure (12) includes a central lower portion which is disposed between said front and rear axles (6',5') and which has a bottom lower than axes of said front and rear axles.

4. A motor truck according to any one of claims 1-3, further comprising a fuel tank (20) disposed under said semi-monocoque box structure (12) and behind said rear axle (5').

5. A motor truck according to any one of the preceding claims, wherein said front wheels (6) are steering wheels.

6. A motor truck according to any one of the preceding claims, wherein said rear wheels are driving wheels (5).

## Patentansprüche

1. Motor-Lastkraftwagen, umfassend:
einen Vollängenkörper (12) zum Tragen von Frachtgut, wobei die Länge des Vollängenkörpers im wesentlichen jener des Lastkraftwagens entspricht;
eine Vorderachse (6'), an der Vorderräder (6) drehbar sind und eine Hinterachse (5'), an der Hinterräder (5) drehbar sind;
ein Fahrerhaus (13) vor der Vorderachse; und
einen Motor (14);
dadurch gekennzeichnet, daß sich der Motor (14) hinter der Hinterachse (5') befindet und operativ mit ihr verbunden ist;
und daß der Vollängenkörper aus einer Halb-Schalengehäuse (12) besteht, an der die Vorder- und die Hinterachse (6', 5') befestigt sind, wobei die Halb-Schalengehäuse einen unteren Vorderabschnitt aufweist, der vor der Vorderachse (6') und auf gleicher Höhe wie diese angeordnet ist, wobei das Fahrerhaus (13) im unteren Vorderabschnitt der Halb-Schalengehäuse positioniert ist und die Halb-Schalengehäuse einen unteren Hinterabschnitt aufweist, der sich hinter der Hinterachse (5') und auf gleicher Höhe wie die Hinterachse befindet, in dem der Motor (14) angeordnet ist.

2. Motor-Lastkraftwagen nach Anspruch 1, worin die Halb-Schalengehäuse (12) eine Vielzahl an Querstrebenelementen (16) zur Verstärkung der Struktur enthält.

3. Motor-Lastkraftwagen nach Anspruch 1 oder 2, worin die Halb-Schalengehäuse (12) einen unteren Mittelabschnitt enthält, der zwischen der Vorder- und der Hinterachse (6', 5') angeordnet ist und einen Boden aufweist, der tiefer als die geometrischen Achsen der Vorder- und Hinterachse liegt.

4. Motor-Lastkraftwagen nach einem der Ansprüche 1-3, weiters umfassend einen Treibstofftank (20) unter der Halb-Schalengehäuse (12) und hinter der Hinterachse (5').

5. Motor-Lastkraftwagen nach einem der vorhergehenden Ansprüche, worin die Vorderräder (6) gelenkte Räder sind.

6. Motor-Lastkraftwagen nach einem der vorhergehenden Ansprüche, worin die Hinterräder Antriebsräder (5) sind.

## Revendications

1. Camion comprenant :
une caisse à pleine longueur (12) pour supporter un fret, ladite caisse à pleine longueur ayant une longueur sensiblement égale à celle du camion ;
un essieu avant (6') pouvant tourner avec des roues avant (6), et un essieu arrière (5') pouvant tourner avec des roues arrière (5) ;
une cabine (13) à l'avant dudit essieu avant ; et
un moteur (14),
caractérisé en ce que ledit moteur (14) est situé derrière ledit essieu arrière (5'), et est relié fonctionnellement audit essieu arrière ; et
ladite caisse à pleine longueur consiste en une structure à caisson semi-monocoque (12) à laquelle lesdits essieux avant et arrière (6', 5') sont fixés, ladite structure à caisson semi-monocoque ayant une partie inférieure avant, à l'avant dudit essieu avant (6') et au même niveau que ledit essieu avant (6'), ladite cabine (13) étant disposée dans ladite partie inférieure avant de ladite structure à caisson semi-monocoque, et ladite structure à caisson semi-monocoque ayant une partie inférieure arrière derrière ledit essieu arrière (5') et au même niveau que ledit essieu arrière dans laquelle ledit moteur (14) est situé.

2. Camion selon la revendication 1, dans lequel ladite structure à caisson semi-monocoque (12) comprend une pluralité de traverses (16) pour renforcer la structure.

3. Camion selon la revendication 1 ou 2, dans lequel ladite structure à caisson semi-monocoque (12) comprend une partie inférieure centrale qui est disposée entre lesdits essieux avant et arrière (6', 5') et qui a un fond plus bas que les axes desdits essieux avant et arrière.

4. Camion selon l'une quelconque des revendications 1 à 3, comprenant en outre un réservoir de carburant (20) disposé sous ladite structure à caisson semi-monocoque (12) et derrière ledit essieu arrière (5').

5. Camion selon l'une quelconque des revendications précédentes, dans lequel lesdites roues avant (6) sont des roues de direction.

6. Camion selon l'une quelconque des revendications précédentes, dans lequel lesdites roues arrière sont des roues motrices (5).
